# EUROPÄISCHE PATENTSCHRIFT

(11) **EP 0 547 196 B1**
(45) Veröffentlichungstag und Bekanntmachung des Hinweises auf die Patenterteilung: **11.10.1995**
(21) Anmeldenummer: 92913392.4
(22) Anmeldetag: 02.07.1992
(51) Int. Cl.: B60T 8/88

(54) **ANTIBLOCKIERREGELSYSTEM**
ANTI-BLOCKING SYSTEM
SYSTEME ANTIBLOCAGE

(30) Priorität: 03.07.1991 DE 4122016
(43) Veröffentlichungstag der Anmeldung: 23.06.1993
(73) Patentinhaber: LUCAS INDUSTRIES PUBLIC LIMITED COMPANY, Solihull, West Midlands B91 3TX (GB); Hella KG Hueck & Co., 59552 Lippstadt (DE)
(72) Erfinder: NIGGEMANN, Detlef, D-4793 Steinhausen (DE); WIEGMANN, Werner, D-4780 Lippstadt (DE); BESTMANN, Harald, D-5408 Nassau (DE); HEINZ, Günther, D-5405 Ochtendung (DE); KELLER, Michael, D-6551 Traisen (DE); SCHNEIDER, Konrad, D-5453 Horhausen (DE); STAUFENBIEL, Detlef, D-5400 Koblenz (DE)
(74) Vertreter: von Hellfeld, Axel, Dr. Dipl.-Phys.
(86) Internationale Anmeldenummer: EP9201488
(87) Internationale Veröffentlichungsnummer: WO9301075

(56) Entgegenhaltungen:
- EP-A- 0 175 843
- EP-A- 0 189 713
- EP-A- 0 328 082
- DE-A- 1 588 644
- DE-A- 3 234 637
- DE-A- 3 644 139
- DE-A- 3 913 113
- GB-A- 2 175 717
- GB-A- 2 188 452
- US-A- 4 503 479
- US-A- 4 999 730
- TRANSPORTATION ELECTRONICS : PROCEEDINGS OF THE INTERNATIONAL CONGRESS ON TRANSPORTATION ELECTRONICS Oktober 1986, Seiten 49 - 54, GERSTENMEIER 'TRACTION CONTROL (ASR), AN EXTENTION OF THE ANTI-LOCK BRAKING SYSTEM (ABS)'

## Beschreibung

Die Erfindung betrifft ein Antiblockierregelsystem mit den Merkmalen des Oberbegriffs des Patentanspruchs 1.

Für besonders sicherheitskritische Vorrichtungen, wie sie Antiblockierregelsysteme darstellen, ist es bekannt und üblich, einen redundanten Aufbau vorzusehen, also alle für die Funktionssicherheit wichtigen Teile mehrfach einzubauen und parallel arbeiten zu lassen, so daß sich die Teile der Vorrichtung gegenseitig in der Funktion überwachen können.

Ein solches redundant aufgebautes, sich selbst überwachendes Antiblockierregelsystem gemäß dem Oberbegriff des Patentanspruchs 1 is in der DE-B-32 34 637 beschrieben.

Hierbei werden speziell aufbereitete Radsensorsignale zwei Ein-Chip-Mikrocomputern parallel zugeführt. Aus den Sensorsignalen berechnen diese Mikrocomputer Ventilsteuersignale und Kontrollsignale. Den Mikrocomputern zugeordnet ist je ein Vergleicher, wobei beiden Vergleichern die Kontrollsignale beider Mikrocomputer sowie das berechnete Ventiltreibersignal des zugeordneten Mikrocomputers zugeführt wird. Desweiteren erhält der eine Vergleicher das Ventilsteuersignal des zweiten Mikrocomputers zugeführt, während der andere Vergleicher nach einer Pegelanpassung das am Magnetventil abgegriffene Ventiltreibersignal zugeführt bekommt. Bei Nichtübereinstimmung der Ventilsteuersignale bzw. des Ventilsteuer- und des Ventiltreibersignals oder auch bei Nichtübereinstimmung der Kontrollsignale wird auf einen Fehler geschlossen. Über eine Steuerstufe und ein Relais kann jeder der Vergleicher das Antiblockierregelsystem abschalten.

Diese Anordnung wird insbesondere durch die beiden Vergleicher unnötig aufwendig, insbesondere hinsichtlich der Kosten und des Platzbedarfs.

Aus der Veröffentlichung TRANSPORTATION ELECTRONICS: PROCEEDINGS OF THE INTERNATIONAL CONGRESS ON TRANSPORTATION ELECTRONICS, Oktober 1986, Seiten 49-54, GERSTENMEIER 'TRACTION CONTROL (ASR), AN EXTENSION OF THE ANTI - LOCK BRAKING SYSTEM (ABS), ist ebenfalls ein Antiblockierregelsystem der im Oberbegriff des Patentanspruchs 1 beschriebenen Art bekannt.

Dieser Stand der Technik bewirkt jedoch, daß bei Fehlfunktionen die gesamte ABS-Anlage abgeschaltet wird. Dies verhindert, daß bei einer nur kurzfristigen Funktionsbeeinträchtigung des Systems die Antiblockieranlage nach Wegfall der Funktionsstörung wieder in Betrieb genommen werden kann.

Der Erfindung liegt deshalb die Aufgabe zugrunde, ein Antiblockierregelsystem der eingangs genannten Art so weiterzubilden, daß es auf unterschiedliche Fehlerquellen besser angepaßt reagiert, insbesondere soll bei einem nur zeitweisen Ausfall einer Komponente des Systems ein weiterer Einsatz des Antiblockierregelsystems dann ermöglicht sein, wenn ein zeitweise vorliegender Funktionsausfall einer Komponente nicht mehr gegeben ist.

Die erfindungsgemäße Lösung dieser Aufgabe ist im Patentanspruch 1 gekennzeichnet.

Bevorzugte Ausgestaltungen der Erfindung sind in den abhängigen Ansprüchen beschrieben.

Die Mikrorechner sind über einen aus parallelen Datenleitungen bestehenden Kommunikationsbus verbunden, über den sie aus den zugeführten Raddrehzahlsignalen berechnete Kontrollsignale austauschen und auf Übereinstimmung vergleichen können. Hierbei werden die Kontrollsignale innerhalb der Mikrorechner überprüft. Spezielle Vergleicherschaltungen oder logische Schaltungseinheiten, die eine Vergleicherschaltung enthalten, werden nicht benötigt. Einfache handelsübliche Ein-Chip-Mikrorechner sind für diese Zwecke vollkommen ausreichend, was sich positiv auf Kosten und Betriebssicherheit des Antiblockierregelsystems auswirkt.

Zudem stellen die mindestens zwei Eingangs-/Ausgangsschaltkreise die Verbindung zu peripheren Komponenten des Antiblockierregelsystems her. Schaltungstechnisch bestehen die als integrierte Bausteine ausgeführten Eingangs-/Ausgangsschaltkreise im wesentlichen aus relativ einfachen Bestandteilen, wie z. B. Pegelanpaßschaltungen, Fensterkomparatoren, Tiefpaßfilter zur Störimpulsunterdrückung usw.

Da eine Reihe wesentlicher elektrischer Größen über die Eingangs-/Ausgangsschaltkreise geführt werden und diese mit allen wichtigen Bauteilen des Antiblockierregelsystems in Verbindung stehen, ist es besonders vorteilhaft, diesen Schaltkreisen auch Überwachungsschaltungen für vorgegebene Signalleitungen der Mikrorechner sowie mindestens einer weiteren elektrischen Größe zuzuordnen, die bei Auftreten eine Fehlers das gesamte oder zumindest sicherheitsrelevante Teile des Antiblockierregelsystems abschalten kann. Hierdurch kann insbesondere auf externe Überwachungsschaltungseinheiten verzichtet werden. Mithin kommt man also mit einer geringeren Anzahl von Bauelementen aus, was die Kosten verringert und die Betriebssicherheit erhöht.

Insbesondere für die Betriebssicherheit ist es vorteilhaft, einen Spannungsregler vorzusehen, der zumindest gegenüber Spannungsschwankungen besonders empfindliche Bauelemente des Antiblockierregelsystems mit einer stabilisierten Spannung versorgt.

Dieses gilt besonders für die Mikrorechner, die im allgemeinen mit einer von der Bordnetzspannung abweichenden Betriebsspannung von typischerweise 5 Volt versorgt werden, sowie auch für die Aktuatortreiberschaltkreise.

Desweiteren ist es zweckmäßig, die mit den Eingangs-/Ausgangsschaltkreisen verbundene Peripherie so den Eingangs-/Ausgangsschaltkreisen zuzuordnen, daß zwei oder mehrere gleiche Eingangs-/Ausgangsschaltkreise verwendet werden können. Da nur ein Typ von Eingangs-/Ausgangsschaltkreisen benötigt wird, können so Entwicklungskosten eingespart werden. Desweiteren bieten die nun mehrfach vorhandenen, voneinander unabhängig arbeitenden Überwachungseinrichtungen die Möglichkeit, die Überwachung der Mikrorechner und der zumindest einen elektrischen Größe redundant und damit mit besonders hoher Sicherheit durchzuführen.

Es ist besonders zweckmäßig, wenn die Eingangs-/Ausgangsschaltkreise als elektrische Große die vom Spannungsregler abgegebene Betriebsspannung für die gegenüber Spannungsschwankungen besonders empfindlichen Bauelementen des Antiblockierregelsystems und zwar gleich mehrfach überwachen. Dies kann auf einfachste Weise durch jeweils einen Fensterkomparator innerhalb jedes Eingangs-/Ausgangsschaltkreises geschehen.

Es ist hierbei besonders günstig, den Fensterkomparatoren eine Einrichtung zur Filterung kurzzeitiger Störimpulse vorzuschalten, damit dieser nicht schon auf kurzzeitige Spannungsspitzen, wie sie in einem Kraftfahrzeug leicht in Leitungen eingestreut werden, anspricht.

Im Fehlerfall, das heißt, z. B. wenn mindestens einer der Eingangs-/Ausgangsschaltkreise eine zu hohe oder zu niedrige Spannung an den besonders gegenüber Spannungsschwankungen empfindlichen Bauelementen feststellt, so erfolgt die Abschaltung des gesamten oder zumindest wesentlicher Teile des Antiblockierregelsystems.

Da nicht von vornherein feststeht, welche Teile des Antiblockierregelsystems einen Fehler bewirkt haben, ist es für die Sicherheit besonders günstig, die Abschaltung des Antiblockierregelsystems auf mehrfache Art vorzusehen. So können z. B. bei Feststellung einer fehlerhaften Spannung an den spannungsempfindlichen Bauelementen mindestens einer der Eingangs-/Ausgangsschaltkreise die Mikrocomputer durch ein Resetsignal oder die Aktuatortreiberschaltkreise durch ein Sperrsignal sperren oder über ein Relais die Versorgungsspannung der Aktuatoren abschalten. In einer bevorzugten Ausführungsform sind alle drei Möglichkeiten gleichzeitig vorgesehen, um ein Abschalten der Aktuatoren unter allen möglichen Fehlerumständen zu gewährleisten.

Desweiteren erscheint es besonders vorteilhaft, wenn bei Auftreten einer zu hohen Spannung mindestens einer der Eingangs-/Ausgangsschaltkreise ein Überspannungssignal erzeugt und der Spannungsregler so ausgeführt ist, daß er bei Beaufschlagung mit dem Überspannungssignal die Spannungsversorgung der besonders spannungsempfindlichen Beuelemente des Antiblockierregelsystems abschaltet, insbesondere um die Zerstörung dieser Teile, falls noch möglich, zu verhindern.

Zweckmäßigerweise werden das Überspannungssignal und das Resetsignal gespeichert, um das Widereinschalten des fehlerhaft arbeitenden Antiblockierregelsystems zu verhindern.

Die Sicherheit des Antiblockierregelsystems ist durch das Einfügen eines Fail-Safe-Relais erhöht, welches im Fehlerfall insbesondere die Spannungsversorgung der Aktuatoren unterbricht.

Dieses gewährleistet eine zuverlässige Abschaltung des Antiblockiersystems selbst in dem Fall, daß die Aktuatortreiberschaltkreise fehlerhaft funktionieren, und zwar auch dann noch, wenn die Aktuatortreiberschaltkreise fehlerhafte Steuersignale an die Aktuatoren geben und die Aktuatortreiberschaltkreise sich durch ein Sperrsignal nicht sperren lassen.

Da dieses Fail-Safe-Relais ein besonders sicherheitsrelevantes Teil darstellt, sollte auch dessen Funktion überwacht werden. Dieses kann auf einfache Weise derart geschehen, daß mindestens einer der Eingangs-/Ausgangsschaltkreise den durch das Fail-Safe-Relais fließenden Strom überwacht oder regelt. Ein zu hoher Fail-Safe-Relaisstrom führt ebenfalls zum vollständigen oder teilweisen Abschalten des Antiblockierregelsystems.

Auch die Aktuatortreiberschaltkreise sollten vorteilhafterweise an der Funktionsüberwachung beteiligt werden. Die Aktuatortreiberschaltkreise geben z. B. die Steuersignale jeweils eines Mikrorechners insbesondere über Schaltverstärker an die Aktuatoren. Das an den Aktuatoren anliegende Signal wird vom Aktuatortreiberschaltkreis aufbereitet und nach einer Pegelanpassung an den jeweils anderen Mikrorechner gegeben, welcher die Korrektheit dieses Signals überprüft.

Der Fahrer eines mit einem Antiblockierregelsystem ausgerüsteten Fahrzeug muß sich auf sein Antiblockierregelsystem verlassen können und wird auf die Zuverlässigkeit seines Blockierschutzsystems vertrauen. Dieses Vertrauen besteht zu Recht, da das beschriebene Antiblockierregelsystem sich in jedem erdenklichen Fehlerfall zuverlässig abschaltet und somit in jedem Fall dem Fahrer zumindest ein gewöhnliches Bremssystem zur Verfügung steht. Gleichwohl kann auch dieses zu einer Gefährdung der Fahrzeuginsassen führen, wenn der Fahrer nicht über den Ausfall des Antiblockierregelsystems informiert ist. Besonders fatale Folgen können eintreten, wenn sich der Fahrer unter widrigen Umständen, wie z. B. nasser Fahrbahn, im Vertrauen auf sein Antiblockierregelsystem zu einer Vollbremsung entschließt, während das Antiblockierregelsystem in Folge der Abschaltung nicht zur Verfügung steht. Es ist daher unbedingt erforderlich, den Fahrer über die Nichtverfügbarkeit des Antiblockierregelsystems zu informieren. Hierzu ist eine Meldeeinrichtung vorzusehen, vorzugsweise in Form einer Warnlampe, die den Fahrer im Fehlerfall vor einer Blockierbremsung warnt.

Da auch die Warnlampe ein besonders sicherheitsrelevantes Teil darstellt, ist es vorteilhaft, wenn zumindest einer der Eingangs-/Ausgangsschaltkreise die Funktion der Warnlampe analog der Relais--Stromkontrolle überwacht.

Es ist besonders vorteilhaft, die Eingangs-/Ausgangsschaltkreise so auszuführen, daß sie die Funktion weiterer sicherheitsrelevanter Teile überwachen können.

Besonders zweckmäßig ist z. B. die Überwachung des Pumpenmotors, welcher für den hydraulischen Druckaufbau innerhalb des Bremssystems sorgt bzw. eine überwachung des Relais, welches den Pumpenmotor ansteuert.

Ein Ausführungsbeispiel des erfindungsgemäßen Antiblockierregelsystems ist in den Zeichnungen dargestellt und wird im folgenden anhand der Zeichnungen näher erläutert.

Die Figuren 1 und 2 zeigen schematisch vereinfacht den Aufbau eines erfindungsgemäßen Antiblockierregelsystems, wobei der in der Figur 1 dargestellte Teil mit dem in der Figur 2 dargestellten Teil des Antiblockierregelsystems über die Verknüpfungspunkte a und b verbunden ist.

Figur 3 erläutert die wesentlichen Funktionen des erfindungsgemäßen Antiblockierregelsystems an einem Teilausschnitt.

Verschiedene Schaltungsteile sind hier als Rechtecke dargestellt. Die von den Eingangs-/Ausgangsschaltkreisen (EAS1, EAS2, EAS) erzeugten oder aufgenommenen Signale sind durch Rechtecke mit einer hervorgehobenen Umrandung wiedergegeben. Die Wege von Spannungen und Signalen sind durch Linien dargestellt, wobei die Signalrichtung also die Richtung vom Sender vom jeweiligen Empfänger durch die Pfeilrichtung verdeutlicht werden soll.

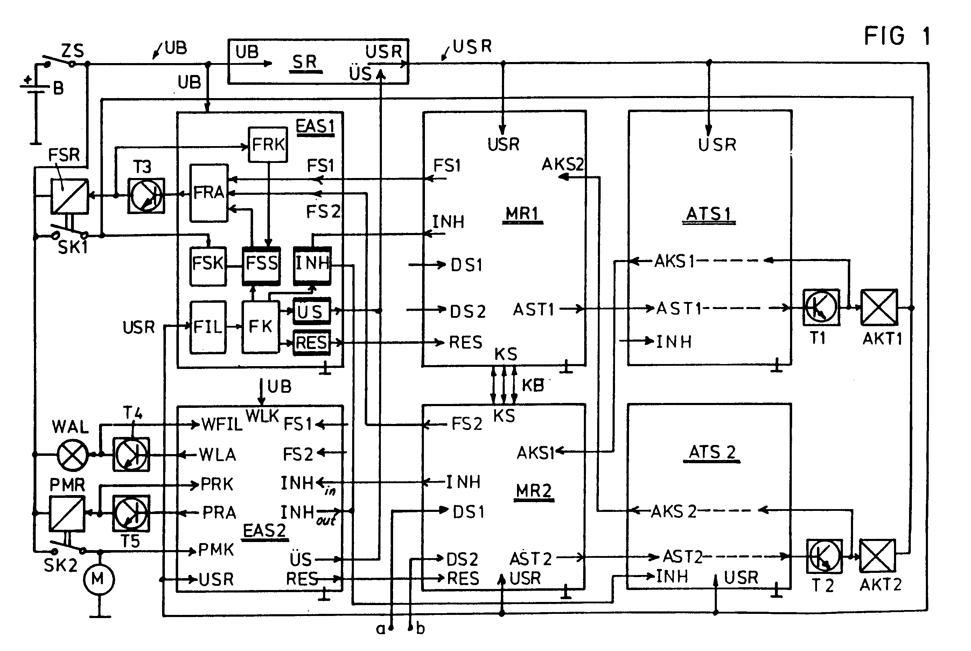

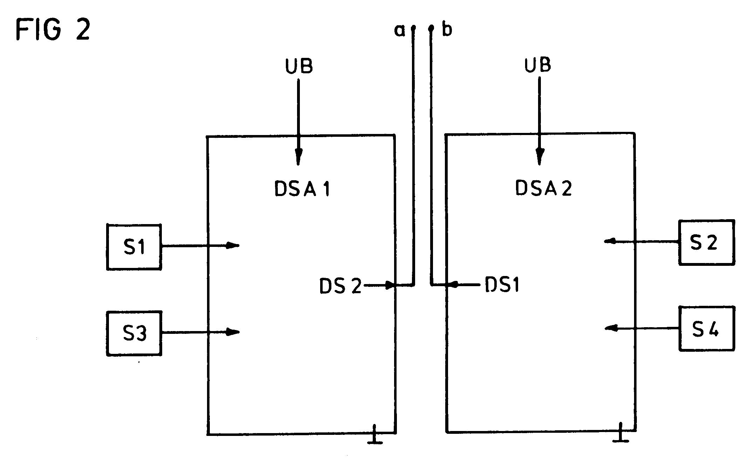

In den Figuren 1 und 2 ist ein erfindungsgemäßes Antiblockierregelsystem dargestellt. Da die folgenden Erläuterungen hauptsächlich die Realisierung von Sicherheitsfunktionen umfassen sollen, sind in den Figuren 1 und 2 Bauteile, die allgemein zu Antiblockierregelsystemen gehören und deren Aufbau man als bekannt voraussetzen kann, nur sehr schematisch dargestellt.

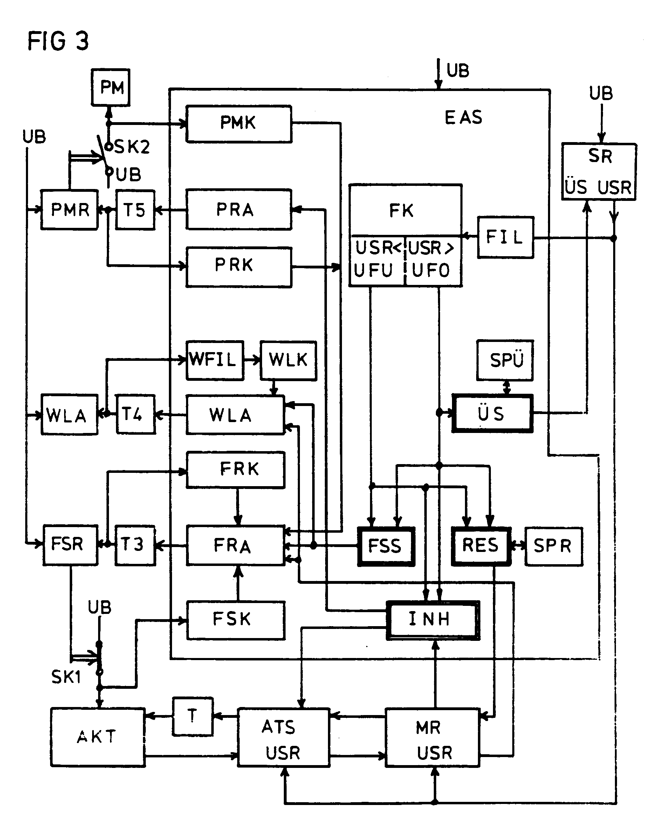

Desweiteren sind, um die Darstellungen übersichtlich zu halten, einige mehrfach vorhandene Einrichtungen, Anschlüsse und elektrische Verbindungen nur einfach aufgeführt worden. Zudem sind die zu den Eingangs-/Ausgangsschaltkreisen (EAS1, EAS2) gehörenden Bauteile und deren Zusammenwirken in einer vereinfachten Darstellung wiedergegeben. Die ausführliche Beschreibung hierzu erfolgt in der Figur 3.

Die von den Raddrehzahlsensoren (S1 - S4) abgegebenen Raddrehzahlsignale (DS1, DS2) werden in den Drehzahlsignalaufbereitungsschaltkreisen (DSA1, DSA2) verarbeitet und von diesen über parallele oder serielle Drehzahlsignalleitungen gleichzeitig an die Mikrorechner (MR1, MR2) gegeben. Die Mikrorechner (MR1, MR2) prüfen die empfangenen Raddrehzahlsignale (DS1, DS2) auf Plausibilität und berechnen hieraus Aktuatorssteuersignale (AST1, AST2) zur Ansteuerung der Aktuatortreiberschaltkreise (ATS1, ATS2) und geben diese über Aktuatorsteuerleitungen an die jeweils zugeordneten Aktuatortreiberschaltkreise (ATS1, ATS2). Hierbei erhält der Aktuatortreiberschaltkreis (ATS1) vom Mikrorechner (MR1) beispielsweise die Aktuatorsteuersignale (AST1) zur Betätigung der Aktuatoren, die vorzugsweise als Magnetventile ausgeführt sind, die zu den Rädern hinten links und vorne rechts gehören. Der Aktuatortreiberschaltkreis (ATS2) steuert entsprechend mit den von dem Mikrorechner (MR2) erhaltenen Aktuatorsteuersignalen (AST2) die entgegengesetzte Diagonale.

Zu jeder Diagonale gehören jeweils vier Aktuatoren, mit dem zugehörigen Schaltverstärkern, wobei jedem Rad jeweils ein Aktuator zum Druckabbau und jeweils ein Aktuator zum Halten des hydraulischen Druckes gehört. In der Figur 1 ist, um die Übersichtlichkeit zu erhöhen, für jede Diagonale jeweils stellvertretend nur einer der vier Aktuatoren eingezeichnet, wobei zu jedem der Aktuatoren (AKT1, AKT2) ein Schaltverstärker (T1, T2) gehört.

Jeder der Mikrorechner (MR1, MR2) berechnet jedoch nicht nur die Steuersignale der ihm zugeordneten, sondern auch die der jeweils anderen Diagonale.

Über den aus mehreren Datenleitungen bestehenden Kommunikationsbus (KB) können beide Mikrorechner (MR1, MR2) die von ihnen berechneten Aktuatorsteuersignale (AST1, AST2) oder aus diesen abgeleitete Signale als Kontrollsignale (KS) austauschen und auf Übereinstimmung prüfen. Zudem vergleicht jeder der Mikrorechner (MR1, MR2) die an den Aktuatoren (AKT2, AKT1) der entgegengesetzten Diagonalen anliegenden Aktuatorsteuersignale (AST2, AST1) mit den für diese Diagonale berechneten Steuersignalen. Hierzu werden die vom jeweiligen Schaltverstärker (T2, T1) abgegebenen Steuersignale als Aktuatorkontrollsignale (AKS2, AKS1) über den als Pegelwandler wirkenden Aktuatortreiberschaltkreis (ATS2, ATS1) an den Mikrorechner (MR1, MR2) der entgegengesetzten Diagonalen zurückgeführt.

Die Mikrorechner (MR1, MR2) interpretieren hierbei jede Nichtübereinstimmung bei diesen Vergleichen als Fehler und geben ein entsprechendes Fehlersignal (FS1, FS2) an jeweils beide Eingangs-/Ausgangsschaltkreise (EAS1, EAS2).

Dieses führt zur Abschaltung wesentlicher Teile des Antiblockierregelsystems. Wird nämlich ein FS1-Signal vom Mikrorechner (MR1) oder ein FS2-Signal vom Mikrorechner (MR2) oder auch beide Signale an den Eingangs-/Ausgangsschaltkreis (EAS1) gegeben, so schaltet der Eingangs-/Ausgangsschaltkreis (EAS1) über die Fail-Safe-Relais-Ansteuerungsschaltung (FRA) und den Schaltverstärker (T3) das Fail-Safe-Relais (FSR) ab. Damit wird die Versorgungsspannung aller Aktuatoren (AKT1, AKT2) abgeschaltet, womit die Bremsanlage auf Bremsen ohne Unterstützung durch das Antiblockierregelsystem zurückgeführt wird.

Beim Eingangs-/Ausgangsschaltkreis (EAS2) bewirkt das Anliegen des Fehlersignals (FS1) und/oder des Fehlersignals (FS2) das Einschalten der Warnlampe (WAL) sowie das Abschalten des Pumpenmotorrelais (PMR), so daß der vom Pumpenmotorrelais (PMR) geschaltete Pumpenmotor (PM) im hydraulischen System keinen Druck mehr aufbauen kann.

Desweiteren fordert einer oder beide Mikrorechner (MR1, MR2) über einen Sperrsignaleingang (INH IN) mindestens eines Eingangs-/Ausgangsschaltkreises (EAS1, EAS) die Abgabe eines Sperrsignals (INH) von mindestens einem der Eingangs-/Ausgangsschaltkreise (EAS1, EAS2) über einen Sperrsignalausgang (INH OUT) an die beiden Aktuatortreiberschaltkreise (ATS1, ATS2) an, die hierdurch keine von den Mikrorechnern (MR1, MR2) erhaltenen Aktuatorsteuersignale (AST1, AST2) mehr an die Schaltverstärker (T1, T2) zur Ansteuerung der Aktuatoren (AKT1, AKT2) weitergeben.

Die Aktuatoren (AKT1, AKT2) werden also bei Auftreten von fehlerhaften Aktuatorsteuersignalen (AST1, AST2) , Aktuatorkontrollsignalen (AKS1, AKS2) und/oder Kontrollsignalen (KS) auf doppelte Weise gegen Betätigung gesperrt.

Bemerkenswert ist, daß der übrige Teil der Schaltung weiter arbeitet. Insbesondere die Mikrorechner (MR1, MR2) verarbeiten weiterhin zugeführte Raddrehzahlsignale (DS1, DS2), so daß sobald die Mikrorechner (MR1, MR2) erneut die Korrektheit der berechneten Aktuatorsteuersignale (AST1, AST2), der Aktuatorkontrollsignale (AKS1, AKS2) und der Kontrollsignale (KS) feststellen, das Antiblockierregelsystem wieder seine Funktion aufnimmt. Wesentlich ist, daß bei andauernder Nichtübereinstimmung der Aktuatorsteuersignale (AST1, AST2), der Aktuatorkontrollsignale (AKS1, AKS2) und/oder der Kontrollsignale (KS) das Antiblockierregelsystem praktisch abgeschaltet bleibt. Zudem kann selbstverständlich softwaremäßig vorgesehen sein, bei Auftreten fehlerhafter Signale, insbesondere bei deren mehrfachen Auftreten ein Wiedereinschalten nicht zuzulassen.

Wesentlich kritischer können die Auswirkungen fehlerhafter Spannungsverhältnisse innerhalb des Antiblockierregelsystems sein, insbesondere wenn sie die Versorgung der besonders spannungsempfindlichen Mikrorechner (MR1, MR2) betreffen. Hier können sich Spannungsfehler als Funktionsstörung und schlimmstenfalls sogar durch die Zerstörung der Mikrorechner (MR1, MR2) auswirken.

Daher werden die Mikrorechner (MR1, MR2) und die mit diesen direkt verbundenen Aktuatortreiberschaltkreise (ATS1, ATS2) über einen Spannungsregler (SR) mit der für Computerschaltkreise üblichen Betriebsspannung von typischerweise 5 Volt versorgt.

Die Eingangs-/Ausgangsschaltkreise (EAS1, EAS2) überwachen beide unabhängig voneinander ständig die Betriebsspannung (USR) der Mikrorechner (MR1, MR2) und der Aktuatortreiberschaltkreise (ATS1, ATS2). Die von dem Spannungsregler (SR) abgegebene Spannung (USR) wird hierzu jeweils einem Eingang der beiden Eingangs-/Ausgangsschaltkreise (EAS1, EAS2) zugeführt. Die Eingangs-/Ausgangsschaltkreise (EAS1, EAS2) arbeiten selbst unabhängig von der vom Spannungsregler (SR) abgegebenen Spannung (USR), sondern werden mit der Bordnetzspannung (UB) des Kraftfahrzeugs versorgt. Jeder der Eingangs-/Ausgangsschaltkreise (EAS1, EAS2) enthält intern jeweils einen Tiefpaßfilter (FIL) zur Ausfilterung von Störspannungen und Spannungsspitzen. Dem Tiefpaßfilter (FIL) nachgeschaltet ist jeweils ein Fensterkomparator (FK). Registrieren nun die beiden Eingangs-/Ausgangsschaltkreise (EAS1, EAS2) eine länger als die Filterzeit andauernde Spannung (USR) außerhalb des Fensterbereichs des Fensterkomparators (FK) so gibt jeder der Eingangs-/Ausgangsschaltkreise (EAS1, EAS2) ein Resetsignal (RES) an den zugehörigen Mikrorechner (MR1, MR2). Diese Funktion ist redundant ausgeführt. Erhält nämlich nur einer der Mikrorecher (MR1, MR2) ein Resetsignal (RES), so wird der jeweils andere Mikrorechner (MR2, MR1) beim Vergleich den aufgetretenen Fehler aufgrund der fehlerhaften oder fehlenden Aktuatorsteuersignale (AST1, AST2), Aktuatorkontrollsignale (AKS1, AKS2) und/oder Kontrollsignale (KS) erkennen.

Aufgrund dieser Bedingungen werden die Mikrorechner (MR1, MR2) die Ansteuerung der Aktuatortreiberschaltkreise (ATS1, ATS2) beenden und statt dessen die Eingangs-/Ausgangsschaltkreise (EAS1, EAS2) mit einem Fehlersignal (FS1, FS2) beaufschlagen jeder der Mikrorechner (MR1, MR2) gibt jeweils ein eigenes Fehlersignal (FS1, FS2) an beide Eingangs-/Ausgangsschaltkreise (EAS1, EAS2). Hierbei ist eines der Fehlersignale (FS1, FS2) am Eingangs-/Ausgangsschaltkreis (EAS1) ausreichend, damit der Eingangs-/Ausgangsschaltkreis (EAS1) das Fail-Safe-Relais (FSR) über einen mit einem Ausgang verbundenen Schaltverstärker (T3) abschaltet. Über einen Schaltkontakt (SK1) des Fail-Safe-Relais (FSR) wird die Spannungsversorgung der Aktuatoren (AKT1, AKT2) geführt, so daß beim Abschalten des Fail-Safe-Relais (FSR) die Spannungsversorgung der Aktuatoren (AKT1, AKT2) mit abgeschaltet wird.

Ein FS1- oder FS2-Signal am Eingangs-/Ausgangsschaltkreis (EAS2) bewirkt über den Schaltverstärker (T5) ein entsprechendes Abschalten des Pumpenmotorrelais (PMR) und damit über den Schaltkontakt (SK2) das Abschalten des den Druckaufbau im hydraulischen System bewirkenden Pumpenmotors (PM). Außerdem schaltet der Eingangs-/Ausgangsschaltkreis (EAS2) über den Schaltverstärker (T4) die Warnlampe (WAL) ein, um den Fahrer des Kraftfahrzeuges über die Nichtverfügbarkeit des Antiblockierregelsystems zu informieren.

Desweiteren fordert jeder der Mikrorechner (MR1, MR2) über den Sperrsignaleingang (INH IN) von dem ihm zugeordneten Eingangs-/Ausgangsschaltkreis (EAS1, EAS2) die Abgabe eines Sperrsignals (INH) an. Der jeweilige Eingangs-/Ausgangsschaltkreis (EAS1, EAS2) gibt daraufhin über seinen Sperrsignalausgang (INH OUT) ein Sperrsignal (INH) an die Aktuatortreiberschaltkreise (ATS1, ATS2) und sperrt damit die Ansteuerung der den Aktuatortreiberschaltkreisen (ATS1, ATS2) nachgeschalteten Schaltverstärkern (T1, T2) zur Betätigung der Aktuatoren (AKT1, AKT2).

Im allgemeinen, das heißt, bei korrektem Funktionieren beider Eingangs-/Ausgangsschaltkreise (EAS1, EAS2) werden beide Eingangs-/Ausgangsschaltkreise (EAS1, EAS2) an ihren Sperrsignalausgängen (INH OUT) das Sperrsignal (INH) abgeben. Um die Aktuatortreiberschaltkreise (ATS1, ATS2) zu sperren, ist es jedoch ausreichend, wenn einer der beiden Eingangs-/Ausgangschaltkreise (EAS1, EAS2) ein Sperrsignal (INH) abgibt. Die Abschaltung der Aktuatortreiberschaltkreise (ATS1, ATS2) durch ein Sperrsignal (INH) des Eingangs-/Ausgangsschaltkreise (EAS1, EAS2) ist somit zur Erhöhung der Sicherheit ebenfalls redundant ausgelegt.

Unabhängig von der jeweiligen Anforderung durch die Mikrorechner (MR1, MR2) erzeugt mindestens einer der beiden Eingangs-/Ausgangsschaltkreise (EAS1, EAS2) bei Auftreten eines Spannungsfehlers neben dem Resetsignal (RES) zusätzlich auch das Fail-Safe-Signal (FSS) und das Sperrsignal (INH).

Es sind also eine Vielzahl unabhängig voneinander wirkender Einrichtungen vorgesehen, um bei einem Spannungsfehler die Betätigung der Aktuatoren (AKT1, AKT2) zuverlässig zu verhindern.

Noch weitaus kritischer als Unterspannung kann sich eine zu hohe Spannung (USR) auswirken, da sie zur Zerstörung insbesondere der Mikrorechner (MR1, MR2) führen kann. Die Eingangs-/Ausgangsschaltkreise (EAS1, EAS2) sind daher so aufgebaut, daß jeder von ihnen beim Auftreten einer Spannung (USR) oberhalb einer durch den Fensterkomparator (FK) vorgegebenen Höhe (UFO) ein Überspannungssignal (ÜS) erzeugen kann. Der Spannungsregler (SR) ist so ausgebildet, daß er bei Ansteuerung durch ein logisches Signal, wie hier z. B. das Überspannungssignal (ÜS), seine Ausgangsspannung (USR) abschaltet. Gibt nun wenigstens einer der Eingangs-/Ausgangsschaltkreise (EAS1, EAS2) ein Überspannungssignal (ÜS) an den Spannungsregler (SR), so unterbricht der Spannungsregler (SR) die Spannungsversorgung von vorgegebenen Bauelementen (MR1), MR2, ATS1, ATS2), und zwar zusätzlich zu den zuvor beschriebenen Maßnahmen.

Der zumindest eine Eingangs-/Ausgangsschaltkreis (EAS1, EAS2), welcher das Überspannungssignal (ÜS) und das Resetsignal erzeugt, speichert diese bis zum Abschalten der Bordnetzspannung (UB). Damit wird ein Wiedereinschalten der Versorgung der vorgegebenen Bauelemente (MR1, MR2, ATS1, ATS2) mit der zu hohen Spannung (USR) verhindert, zumindest bis das Antiblockierregelsystem durch Betätigen des Zündschalters (ZS) vom Fahrzeugbordnetz (B) getrennt wird. Durch eine geeignete Wahl der oberen Fensterspannung (UFO) der Fensterkomparatoren (FK) innerhalb der Eingangs-/Ausgangsschaltkreise (EAS1, EAS2) kann so bei überhöhten Spannungswerten (USR) eine Abschaltung der Spannungsversorgung der Mikrorechner (MR1, MR2) und der Aktuatortreiberschaltkreise (ATS1, ATS2) vorgenommen werden, bevor eine Zerstörung dieser Bauelemente eintritt.

Zudem stellt die Abschaltmöglichkeit des Spannungsreglers (SR) durch ein Überspannungssignal (ÜS) neben der Abschaltung der Aktuatorversorgungsspannung durch das Fail-Safe-Relais (FSR) und der Sperrung der Mikrorechner (MR1, MR2) durch ein Resetsignal (RES) und der Aktuatortreiberschaltkreise (ATS1, ATS2) durch ein Sperrsignal (INH), sowie durch das mehrfache Vorhandensein wesentlicher Überwachungseinrichtungen, insbesondere der Eingangs-/Ausgangsschaltkreise (EAS1, EAS2) und der Mikrorechner (MR1, MR2), eine weitere Sicherheitsmaßnahme dar und bewirkt eine weitere Erhöhung der Funktionssicherheit des Antiblockierregelsystems.

Durch das Zusammenwirken einer Vielzahl verschiedener voneinander unabhängiger Überwachungsfunktionen und Signalen wird mit sehr hoher Sicherheit verhindert, daß beim Auftreten fehlerhafter Zustände innerhalb des Antiblockierregelsystems eine Betätigung der Aktuatoren erfolgt.

Dieses sehr hohe Sicherheitsniveau wird, wie die Figuren 1 und 2 zeigen, mit einer relativ geringen Anzahl von Bauelementen erreicht und dies obwohl einige Bauelemente doppelt vorhanden sind und bestimmte Funktionen redundant ausgeführt werden.

Obgleich das Antiblockierregelsystem durch die zuvor genannten Maßnahmen fehlerhafte Zustände zuverlässig erkennt, und das Antiblockierregelsystem selbst bei Ausfall eines oder sogar mehrerer Bauelemente des Antiblockierregelsystems die Aktuatoren zuverlässig abschaltet, sind zur weiteren Erhöhung der Zuverlässigkeit die zusätzliche Überwachung vorgegebener einzelner Bauelemente des Antiblockierregelsystems vorgesehen.

So überwacht eine Fail-Safe-Relais-Kontrollschaltung (FRK) innerhalb des Ein-/Ausgangsschaltkreises (EAS1) den Strom durch das Fail-Safe-Relais (FSR). Dies kann z. B. dadurch geschehen, daß die Fail-Safe-Relais-Kontrollschaltung (FRK) als eine Regelschaltung ausgeführt ist und die vom Schaltverstärker (T3) gesteuerte Stromstärke durch das Fail-Safe-Relais (FSR) auf einen vorgegebenen Wert einregelt. Eine besonders einfache Relaisstromüberwachung erhält man durch Messung des Relaisstroms über den Spannungsabfall an einem zum Schaltverstärker (T3) gehörenden Widerstand und Überwachung dieses Spannungsabfalls durch einen in die Fail-Safe-Relais-Kontrollschaltung (FRK) integrierten Fensterkomparator.

Desweiteren ist vorgesehen, neben der Stromaufnahme des Fail-Safe-Relais (FSR) auch die Funktion der Fail-Safe-Relais-Kontakte zu kontrollieren. Hierzu wird die über den Schaltkontakt (SK1) des Fail-Safe-Relais (FSR) geführte Versorgungsspannung (UB) für die Aktuatoren (AKT1, AKT2) abgegriffen und von einer Fail-Safe-Relais-Kontaktüberwachungsschaltung (FSK) innerhalb des Eingangs-/Ausgangsschaltkeises (EAS1) überwacht und so der Schaltzustand des Fail-Safe-Relais (FSR) bestimmt.

Der Eingangs-/Ausgangsschaltkreis (EAS2) ist in Aufbau und Funktion identisch zum beschriebenen Eingangs-/Ausgangsschaltkreis (EAS1), wobei lediglich anstelle des Fail-Safe-Relais (FSR) eine Warnlampe (WAL) und ein Pumpenmotorrelais (PMR) angesteuert und überwacht wird.

Da die im Eingangs-/Ausgangsschaltkreis (EAS2) integrierten Schaltungsbestandteile lediglich in einigen ihrer Bezeichnungen von denen des Eingangs-/Ausgangsschaltkreises (EAS1) abweicht, sind in der Figur 1 die steuernden bzw. angesteuerten Schaltungsbestandteile des Eingangs-/Ausgangsschaltkreises (EAS2) lediglich anhand ihrer Kurzbezeichnungen dargestellt.

Das Zusammenwirken dieser Schaltungsbestandteile wird (für beide Eingangs-/Ausgangsschaltkreise (EAS1, EAS2) gemeinsam) weiter unten anhand der Figur 3 beschrieben werden.

Im dargestellten Ausführungsbeispiel wird die Warnlampe (WAL) von einer Warnlampenansteuerungsschaltung (WLA) des Eingangs-/Ausgangsschaltkreises (EAS2) über einen Schaltverstärker (T4) angesteuert. Von einem in der Figur 1 nicht dargestellten, zum Schaltverstärker (T4) gehörenden Widerstand wird eine dem Warnlampenstrom proportionale Spannung abgegriffen und über das Tiepaßfilter (WFIL), welches durch den erhöhten Einschaltstrom der Warnlampe (WAL) bewirkte, kurzzeitige Spannungsspitzen ausfiltert, der Warnlampenkontrollschaltung (WLK) des Eingangs-/Ausgangsschaltkreises (EAS2) zugeführt. Ergibt sich ein zu hoher Lampenstrom, etwa bei einem Kurzschluß, so schaltet die Warnlampenansteuerungsschaltung (WLA) die Warnlampe (WAL) schnellstens ab, um die übrige Elektronik zu schützen. Die Warnlampenkontrollschaltung (WLK) erkennt auch eine defekte oder fehlende Warnlampe (WAL), insbesondere beim Versuch, die Warnlampe (WAL) anzusteuern, also im Fehlerfall. Da der Fahrer nun nicht über das fehlerhafte Antiblockierregelsystem informiert werden kann, erscheint es ratsam, eine Gesamtabschaltung des Antiblockierregelsystems vorzunehmen, etwa dadurch, daß der Eingangs-/Ausgangsschaltkreis (EAS2) ein Resetsignal (RES) und ein Sperrsignal (INH) abgibt. Da die Warnlampe (WAL) im allgemeinen zusammen mit dem Fail-Safe-Relais (FSR) angesteuert wird, erfolgt die Feststellung des Warnlampenfehlers durch den Eingangs-/Ausgangsschaltkreis (EAS2) in einem Moment, in dem die Aktuatoren (AKT1, AKT2) ohnehin abgeschaltet werden.

Um jedoch zu verhindern, daß bestimmte Fehler erst bei einem Antiblockierregelvorgang erkannt werden, führt das Antiblockierregelsystem in relativ kurzfristigen Abständen, vorzugsweise bei jedem Startvorgang des Kraftfahrzeugs eine automatische Funktionsüberprüfung verschiedener Bauelemente des Antiblockierregelsystems durch. Hierzu steuern die Mikrorechner (MR1, MR2), insbesondere über die Eingangs-/Ausgangsschaltkreise (EAS1, EAS2), verschiedene Bauelemente des Antiblockierregelsystems wie das Fail-Safe-Relais (FSR), das Pumpenmotorrelais (PMR), den Pumpenmotor (PM) und die Warnlampe (WAL) an. Über die Rückmeldungen der Überwachungseinrichtungen kann auf die richtige Funktion dieser Bauelemente geschlossen werden. Spätestens bei einer solchen Funktionsüberprüfung wird der Fahrer auch ein Nichtfunktionieren der Warnlampe (WAL) zur Kenntnis nehmen. Auf ähnliche Weise erfolgt die Überprüfung der Aktuatoren (AKT1, AKT2) und der Aktuatortreiberschaltkreise (ATS1, ATS2). Hierzu gibt jeder Mikrorechner (MR1, MR2) an den zugeordneten Aktuatortreiberschaltkreis (ATS1, ATS2) ein Aktuatorsteuersignal für die Aktuatoren (AKT1, AKT2). Die an den Aktuatoren (AKT1, AKT2) abgegriffenen Kontrollsignale (AKS1, AKS2) werden über die zugehörigen Aktuatortreiberschaltkreise (ATS1, ATS2) an den jeweils anderen Mikrorechner (MR2, MR1) zurückgeführt. Auf diese Weise kann schon zu Beginn einer Fahrt überprüft werden, ob alle Komponenten des Antiblockierregelsystems sich in einem betriebssicheren Zustand befinden.

Ein schon erwähntes und für die Sicherheit wesentliches Bauelement des Antiblockierregelsystems stellt der Pumpenmotor (PM) dar. Dieser Pumpenmotor sorgt für den Druckaufbau im hydraulischen Bremssystem und muß spätestens bei Beginn einer Antiblockierbremsung eingeschaltet werden und einwandfrei funktionieren, um den durch das Antiblockierregelsystem abgesenkten Bremsdruck wieder aufzubauen. Der Pumpenmotor (PM) wird über einen Schaltkontakt (SK2) des Pumpenmotorrelais (PMR) betätigt. Das Pumpenmotorrelais (PMR) wird auf gleiche Weise durch den Eingangs-/Ausgangsschaltkreis (EAS2) angesteuert und überwacht wie das Fail-Safe-Relais (FSR) durch den Eingangs-/Ausgangsbaustein (EAS1). Hierbei wird das Pumpenmotorrelais (PMR) durch die Pumpenmotorrelaisansteuerungsschaltung (PRA) des Eingangs-/Ausgangsbausteins (EAS2) über den Schaltverstärker (T5) angesteuert. Die Pumpenmotorrelaiskontrollschaltung (PRK) des Eingangs-/Ausgangsbausteins (EAS2) regelt oder überwacht die Stromstärke durch das Pumpenmotorrelais (PMR). Die Pumpenmotorkontrollschaltung (PMK) des Eingangs-/Ausgangsschaltkreises (EAS2) überwacht die über den Schaltkontakt (SK2) des Pumpenmotorrelais (PMR) geführte, am Pumpenmotor (PM) anliegende Spannung. Hierdurch kontrolliert der Eingangs-/Ausgangsschaltkreis (EAS2) ständig sowohl den Schaltzustand des Pumpenmotorrelais (PMR) als auch die Funktionsfähigkeit des Pumpenmotors (PM).

Die Vielzahl der Überwachungsfunktionen und das Zusammenwirken von verschiedenen Bauelementen des Antiblockierregelsystems sowie die zwischen den Bauelementen ausgetauschten Signale verdeutlicht die Figur 3 an einem Teilausschnitt des Antiblockierregelsystems.

Als wesentliches Bauelement ist hier ein Eingangs-/Ausgangsschaltkreis (EAS) mit der zu beiden Eingangs-/Ausgangsschaltkreisen (EAS1, EAS2) gehörenden Außenbeschaltung dargestellt.

Zu beachten ist, daß die Figur 3 lediglich einen überblick über verschiedene Funktionen des Antiblockierregelsystems geben soll. Nicht berücksichtigt wird hierbei der redundante Aufbau des Antiblockierregelsystems, insbesondere das Zusammenwirken des dargestellten Teils mit den Bauelementen des nichtdargestellten Teils des Antiblockierregelsystems, also insbesondere auch das Zusammenwirken der beiden Mikrorechner. Um einen Gesamtüberblick zu geben, wurde in der Figur 3 im Gegensatz zur Darstellung in der Figur 1 auch darauf verzichtet, verschiedene Überwachungsfunktionen auf die beiden Eingangs-/Ausgangsschaltkreise aufzuteilen.

Der Eingangs-/Ausgangsschaltkreis (EAS), der Spannungsregler (SR) sowie der Aktuator (AKT) werden mit der Bordnetzspannung (UB) des Kraftfahrzeuges versorgt. Der Spannungsregler (SR) erzeugt aus der Bordnetzspannung (UB) die zur Versorgung des Mikrorechners (MR) und des Aktuatortreiberschaltkreises (ATS) benötigte Spannung (USR).

Ein zum Eingangs-/Ausgangsschaltkreis (EAS) gehörender Tiefpaßfilter (FIL) siebt aus dieser Spannung (USR) kurzzeitige Störimpulse heraus und führt die Spannung (USR) zur Spannungsüberwachung einem Fensterkomparator (FK) zu. Der Fensterkomparator (FK) bewirkt, daß der Eingangs-/Ausgangsschaltkreis (EAS) im Falle einer zu niedrigen Spannung (die geregelte Spannung (USR) liegt unterhalb der unteren Fensterspannung (UFU)) oder einer zu hohen Spannung (die geregelte Spannung (USR) liegt oberhalb der oberen Fensterspannung (UFO)) ein Resetsignal (RES) erzeugt, welches an den Mikrorechner (MR) gegeben wird und diesen in einer definierten Zustand bringt. Zusammen mit diesem Resetsignal (RES) wird ebenfalls ein Sperrsignal (INH) generiert, welches über den Sperrsignalausgang (INH OUT) an den Aktuatortreiberschaltkreis (ATS) gegeben wird und dort den Signalaustausch zwischen dem Mikrorechner (MR) und dem Aktuator (AKT) blockiert. Innerhalb des Eingangs-/Ausgangsbausteins (EAS) wird das Sperrsignal (INH) an die Pumpenmotorrelaisansteuerungsschaltung (PMA) gegeben und blockiert dort die Ansteuerung des Pumpenmotorrelais (PMR) bzw. bewirkt die Abschaltung des Pumpenmotorrelais (PMR).

Desweiteren erzeugt der Eingangs-/Ausgangsschaltkreis (EAS) zusammen mit dem Resetsignal (RES) auch immer ein Fail-Safe-Signal (FSS), welches über die Fail-Safe-Relais-Ansteuerungsschaltung (FSA) das Abschalten des Fail-Safe-Relais (FSR) bewirkt, so daß der Schaltkontakt (SK1) des Fail-Safe-Relais (FSR) die Spannungsversorgung (UB) des Aktuators (AKT) unterbricht.

Registriert der Fensterkomparator (FK) eine Spannung (USR), die oberhalb der oberen Fensterspannung liegt (USR > UFO), so erzeugt der Eingangs-/Ausgangsschaltkreis (EAS) zusätzlich zu den genannten Signalen (INH, RES, FSS) ein Überspannungssignal (ÜS), welches an den Spannungsregler (SR) gegeben wird und diesen zum Abschalten der Spannung (USR) veranlaßt. Hierdurch wird eine Zerstörung des Mikrorechners (MR) und des Aktuatortreiberschaltkreises (ATS) verhindert.

Sowohl das Resetsignal (RES) als auch das Überspannungssignal (ÜS) werden in den Speichereinrichtungen (SPR bzw. SPÜ) bis zum Abschalten der Bordnetzspannung (UB) zwischengespeichert. Zwischen dem Mikrorechner (MR), dem Aktuatortreiberschaltkreis (ATS) und dem den Aktuator (AKT) ansteuernden Schaltverstärker (T) besteht eine bidirektionale Verbindung. Der Aktuatortreiberschaltkreis (ATS) steuert also nicht nur gemäß den vom Mikrorechner (MR) empfangenen Daten über den Schaltverstärker (T) den Aktuator (AKT), sondern meldet das am Aktuator (AKT) anliegende Signal nach einer Pegelumsetzung an den Mikrorechner (MR) zurück.

Stellt der Mikrorechner (MR) bei der Ansteuerung des Aktuators (AKT) einen Fehler fest, so steuert er den Eingangs-/Ausgangsschaltkreis (EAS) dergestalt an, daß dieser zum einen über ein Sperrsignal (INH) am Aktuatortreiberschaltkreis (ATS) die Datenübergabe zwischen dem Mikrorechner (MR) und dem Aktuator (AKT) blockiert und zum anderen über ein Fail-Safe-Signal (FSS) das Fail-Safe-Relais (FSR) abschaltet und so der Arbeitskontakt (SK1) des Fail-Safe-Relais (FSR) die Versorgung des Aktuators (AKT) mit der Bordnetzspannung (UB) unterbricht.

Auf gleiche Weise schaltet der Mikrorechner (MR) das Antiblockierregelsystem ab, wenn beim Austausch von Kontrollsignalen mit einem in der Figur 3 nicht dargestellten zweiten Mikrorechner eine Nichtübereinstimmung der Kontrollsignale auftritt.

Im Fehlerfall wird zusammen mit der Abschaltung des Fail-Safe-Relais (FSR) dem Fahrer über die Warnlampe (WAL) signalisiert, daß sein Antiblockierregelsystem ihm derzeit nicht zur Verfügung steht.

Hierzu steuert der Eingangs-/Ausgangsschaltkreis (EAS) beim Auftreten eines Fail-Safe-Signals (FSS) die Warnlampe (WAL) an.

Dieses kann im einfachsten Fall über einen Ruhekontakt des Fail-Safe-Relais (FSR) erfolgen oder aber, wie in der Figur 3 dargestellt, über die Warnlampenansteuerungsschaltung (WLA) des Eingangs-/Ausgangsschaltkreises (EAS), welche über einen Schaltverstärker (T4) die Warnlampe (WAL) ansteuert.

Zudem kontrolliert eine Warnlampenkontrollschaltung (WLK) des Eingangs-/Ausgangsschaltkreises (EAS) den Warnlampenstrom. Diese Baugruppe kann insbesondere als Fensterkomparator ausgeführt sein, der eine dem Warnlampenstrom proportionale Spannung überwacht. Dem Komparator vorgeschaltet, ist ein Tiefpaßfilter (WFIL), der kurzfristige Spannungsimpulse, wie sie z. B. durch den Einschaltstromimpuls der Warnlampe (WAL) ausgelöst werden, herausfiltert. Tritt ein überhöhter Lampenstrom auf, so wird die Ansteuerung der Warnlampe (WAL) unterbrochen.

Eine ähnliche Stromüberwachung ist auch bei der Ansteuerung des Fail-Safe-Relais (FSR) und des Pumpenmotorrelais (PMR) vorgesehen. Alternativ zur Relaisstromüberwachung kann hier auch jeweils eine Regelung des Relaisstroms vorgesehen werden. Desweiteren ist auch jeweils eine Überwachung des Schaltzustands der Relais (FSR, PMR) vorgesehen. Hierzu sind eine Fail-Safe-Relais-Kontaktüberwachungsschaltung (FSK) und eine Pumpenmotorkontrollschaltung (PMK) innerhalb des Eingangs-/Ausgangsschaltkreises (EAS) vorgesehen, die jeweils eine von einem Relaiskontakt (SK1, SK2) geschaltete Spannung überwachen.

Im einzelnen gehören zum Pumpenmotorrelais (PMR) innerhalb des Eingangs-/Ausgangsschaltkreises (EAS) eine Schaltung (PRA) zur Ansteuerung des Pumpenmotorrelais (PMR) und eine Schaltung zur Kontrolle des Pumpenmotorrelaisstroms (PRK). Der Pumpenmotor (PM) wird über den Pumpenmotorrelais-Schaltkontakt (SK2) an die Bordnetzspannung (UB) geschaltet. Die vom Pumpenmotorrelais-Schaltkontakt (SK2) geschaltete am Pumpenmotor (PM) anliegende Spannung wird durch die Pumpenmotorkontrollschaltung (PMK) überwacht.

Stellt die Pumpenmotorrelaiskontrollschaltung (PRK) einen überhöhten Pumpenmotorrelaisstrom oder die Pumpenmotorkontrollschaltung (PMK) eine fehlerhafte Spannung am Pumpenmotor (PM) fest, so schaltet nicht nur die Pumpenmotorrelaisansteuerungsschaltung (PRA) über den Schaltverstärker (T5) das Pumpenmotorrelais (PMR), sondern auch über die Fail-Safe-Relais-Ansteuerungsschaltung (FRA) und den Schaltverstärker (T3) das Fail-Safe-Relais (FSR) und damit die Spannungsversorgung des Aktuators (AKT) ab.

Eine Abschaltung des Fail-Safe-Relais (FSR) und damit des Aktuators (AKT) erfolgt auch, wenn die Fail-Safe-Relais-Kontrollschaltung (FRK) einen überhöhten Fail-Safe-Relaisstrom oder die Fail-Safe-Relais-Kontaktüberwachungsschaltung (FSK) eine fehlerhafte Spannung am Aktuator (AKT) registriert.

Selbstverständlich können auch noch weitere Elemente des Antiblockierregelsystems durch den Eingangs-/Ausgangsschaltkreis (EAS) überwacht werden. Da hierzu lediglich einfach aufgebaute, weitere Baugruppen in den Eingangs-/Ausgangsschaltkreis (EAS) integriert werden müßten, die zudem in ihrem Aufbau den bereits vorhandenen Schaltungsbestandteilen weitgehend entsprechen, würde der Schaltungsaufwand hierbei nicht wesentlich vergrößert werden.

## Patentansprüche

1. Antiblockierregelsystem, mit
mindestens zwei Mikrorechnern (MR1, MR2, MR),
denen gleiche Raddrehzahlsignale (DS1, DS2) zugeführt werden,
die diese Signale unabhängig voneinander auswerten,
die aus diesen Signalen Kontrollsignale (KS) erzeugen,
die diese Kontrollsignale (KS) vergleichen,
und die bei Nichtübereinstimmung der Kontrollsignale (KS) ein Fehlersignal (FS1, FS2, FS) erzeugen, und
zumindest einem Eingangs-/Ausgangsschaltkreis (EAS1, EAS2, EAS),
der ein Fail-Safe-Relais (FSR) ansteuert,
und der bei Anliegen eines Fehlersignals (FS1, FS2, FS) von wenigstens einem der Mikrorechner (MR1, MR2, MR) die Spannungsversorgung von Aktuatoren (AKT1, AKT2, AKT) mittels Abschaltung des Fail-Safe-Relais (FSR) unterbricht,
dadurch gekennzeichnet, daß
mindestens zwei Eingangs-/Ausgangsschaltkreise (EAS1, EAS2, EAS) vorgesehen sind, die vorgegebene Signalleitungen der Mikrorechner (MR1, MR2, MR) sowie zumindest eine weitere elektrische Größe (USR) des Antiblockierregelsystems überwachen
und daß jeder Eingangs-/Ausgangsschaltkreis (EAS1, EAS2, EAS) einen Sperrsignalausgang (INH OUT) zur Abgabe eines Sperrsignals (INH) besitzt, welches
bei Anliegen eines Sperrsignals (INH) von wenigstens einem der Mikrorechner (MR1, MR2, MR) an einem der Eingangs-/Ausgangsschaltkreise (EAS1, EAS2, EAS)
oder
bei Anliegen eines fehlerhaften Wertes der überwachten elektrischen Größe (USR)
die Funktion vorgegebener Teile (ATS1, ATS2, ATS, AKT1, AKT2, AKT, PMR) des Antiblockierregelsystems blockiert.

2. Antiblockierregelsystem nach Anspruch 1, dadurch gekennzeichnet, daß ein Spannungsregler (SR) vorgesehen ist, der vorgegebene Bauelemente des Antiblockierregelsystems mit einer stabilisierten Spannung (USR) versorgt.

3. Antiblockierregelsystem nach Anspruch 2, dadurch gekennzeichnet, daß zu den vorgegebenen Bauelementen des Antiblockierregelsystems mindestens ein Mikrorechner (MR1, MR2, MR) gehört.

4. Antiblockierregelsystem nach Anspruch 2, dadurch gekennzeichnet, daß zu den vorgegebenen Bauelementen des Antiblockierregelsystems mindestens ein Aktuatortreiberschaltkreis (ATS1, ATS2, ATS) gehört.

5. Antiblockierregelsystem nach Anspruch 2, dadurch gekennzeichnet, daß die Höhe der vom Spannungsregler (SR) abgegebenen Spannung (USR) 5 Volt beträgt.

6. Antiblockierregelsystem nach Anspruch 2, dadurch gekennzeichnet, daß der Spannungsregler (SR) durch ein Steuersignal (ÜS) dergestalt beeinflußt werden kann, daß er die Spannungsversorgung der vorgegebenen Bauelemente des Antiblockierregelsystems unterbricht.

7. Antiblockierregelsystem nach Anspruch 1, dadurch gekennzeichnet, daß die Eingangs-/Ausgangsschaltkreise (EAS1, EAS2, EAS) identisch aufgebaut sind.

8. Antiblockierregelsystem nach Anspruch 1, dadurch gekennzeichnet, daß die Eingangs-/Ausgangsschaltkreise (EAS1, EAS2, EAS) unabhängig voneinander arbeiten.

9. Antiblockierregelsystem nach Anspruch 1, dadurch gekennzeichnet, daß mindestens einer der Eingangs-/Ausgangsschaltkreise (EAS1, EAS2, EAS) ein Fail-Safe-Relais (FSR) ansteuern kann.

10. Antiblockierregelsystem nach Anspruch 1, dadurch gekennzeichnet, daß jeder der Eingangs-/Ausgangsschaltkreise (EAS1, EAS2, EAS) mindestens einen Fensterkomparator (FK) zur Überwachung von mindestens einer Spannung besitzt.

11. Antiblockierregelsystem nach Anspruch 10, dadurch gekennzeichnet, daß die von den Eingangs-/Ausgangsschaltkreisen (EAS1, EAS2, EAS) überwachte Spannung nicht mit der Betriebsspannung (UB) der Eingangs-/Ausgangsschaltkreise (EAS1, EAS2, EAS) identisch ist.

12. Antiblockierregelsystem nach Anspruch 2 und 10, dadurch gekennzeichnet, daß die von den Eingangs-/Ausgangsschaltkreisen (EAS1, EAS2, EAS) überwachte Spannung die von dem Spannungsregler (SR) abgegebene Spannung (USR) ist.

13. Antiblockierregelsystem nach Anspruch 10, dadurch gekennzeichnet, daß dem/den Fensterkomparator/en (FK) (ein) Filter (FIL) zum Herausfiltern von kurzzeitigen Spannungsunregelmäßigkeiten vorgeschaltet ist/sind.

14. Antiblockierregelsystem nach Anspruch 10, dadurch gekennzeichnet, daß jeder der Eingangs-/Ausgangsschaltkreise (EAS1, EAS2, EAS) bei Anliegen einer Spannung (USR) am Fensterkomparator (FK), die außerhalb des Fensterbereichs (USR < UFU oder USR > UFO) liegt, ein Resetsignal (RES) erzeugt und an mindestens einen der Mikrorechner (MR1, MR2, MR) gibt.

15. Antiblockierregelsystem nach Anspruch 14, dadurch gekennzeichnet, daß jeder der Eingangs-/Ausgangsschaltkreise (EAS1, EAS2, EAS) bei Auslösung des Resetsignals (RES) durch eine Spannung (USR) unterhalb des Fensterbereichs (USR < UFU) das Resetsignal (RES) noch für eine weitere, vorgegebene Zeitdauer abgibt, nachdem sich die Höhe der Spannung wieder innerhalb des Fensterbereichs (UFU < USR < UFO) eingepegelt hat.

16. Antiblockierregelsystem nach den Ansprüchen 10 bis 14, dadurch gekennzeichnet, daß jeder der Eingangs-/Ausgangsschaltkreise (EAS1, EAS2, EAS) bei Anliegen einer Spannung (USR) oberhalb des Fensterbereichs (USR > UFO) des Fensterkomparators (FK) ein Überspannungssignal (ÜS) erzeugt.

17. Antiblockierregelsystem nach den Ansprüchen 6 und 16, dadurch gekennzeichnet, daß bei Anliegen einer Spannung (USR) oberhalb des Fensterbereichs (USR > UFO) des Fensterkomparators (FK) der Spannungsregler (SR) mit dem Überspannungssignal (ÜS) beaufschlagt wird und dieser daraufhin die Spannungsversorgung für vorgegebene Bauelemente des Antiblockierregelsystems unterbricht.

18. Antiblockierregelsystem nach Anspruch 16, dadurch gekennzeichnet, daß jeder der Eingangs-/Ausgangsschaltkreise (EAS1, EAS2, EAS) ein Überspannungssignal (ÜS) erzeugt, wenn eine zu hohe Spannung (USR > UFO) länger als eine durch das Filter (FIL) vorgegebene Filterzeit am Fensterkomparator (FK) anliegt.

19. Antiblockierregelsystem nach den Ansprüchen 14 und 16, dadurch gekennzeichnet, daß zu jedem der Eingangs-/Ausgangsschaltkreise (EAS1, EAS2, EAS) Speichereinrichtungen (SPR, SPÜ) gehören, die sowohl das Resetsignal (RES) als auch das Überspannungssignal (ÜS) bis zum Abschalten der Bordnetzspannung (UB) speichern.

20. Antiblockierregelsystem nach einem der vorhergehenden Ansprüche,
dadurch gekennzeichnet, daß
zu den vorgegebenen Teilen des Antiblockierregelsystems die Aktuatortreiberschaltkreise (ATS1, ATS2, ATS) gehören.

21. Antiblockierregelsystem nach einem der vorhergehenden Ansprüche,
dadurch gekennzeichnet, daß
zu den vorgegebenen Teilen ein Pumpenmotorrelais (PMR) gehört.

22. Antiblockierregelsystem nach einem der vorhergehenden Ansprüche,
dadurch gekennzeichnet, daß
jeder der Eingangs-/Ausgangsschaltkreise (EAS1, EAS2, EAS) das Sperrsignal (INH) bei Auftreten eines Resetsignals (RES) erzeugt.

23. Antiblockierregelsystem nach einem der vorhergehenden Ansprüche,
dadurch gekennzeichnet, daß
an jedem Eingangs-/Ausgangsschaltkreis (EAS1, EAS2, EAS) ein Sperrsignaleingang (IHN IN) vorgesehen ist, bei dessen Beaufschlagung mit einem bestimmten logischen Pegel der Eingangs-/Ausgangsschaltkreis (EAS1, EAS2, EAS) das Sperrsignal (IHN) erzeugt.

24. Antiblockierregelsystem nach Anspruch 23,
dadurch gekennzeichnet, daß
jeder der erwähnten Sperrsignaleingänge (INH IN) mit einem der Mikrorechnerausgänge verbunden ist.

25. Antiblockierregelsystem nach Anspruch 1,
dadurch gekennzeichnet, daß
mindestens einer der Eingangs/Ausgangsschaltkreise (EAS1, EAS) bei Auftreten vorgegebener Zustände innerhalb des Antiblockierregelsystems die Spannungsversorgung der Aktuatoren (AKT1, AKT2, AKT) unterbricht.

26. Antiblockierregelsystem nach Anspruch 25,
dadurch gekennzeichnet, daß
die Abschaltung der Aktuatoren (AKT1, AKT2, AKT) über die Abschaltung von mindestens einem Fail-Safe-Relais (FSR) bewirkt wird.

27. Antiblockierregelsystem nach Anspruch 25, oder 26,
dadurch gekennzeichnet, daß
wenigstens einer der Eingangs-/Ausgangsschaltkreise (EAS1, EAS2, EAS) die Spannungsversorgung der Aktuatoren (AKT1, AKT2, AKT) unterbricht, wenn mindestens einer der Mikrorechner (MR1, MR2, MR) ein Fehlersignal (FS1, FS2, FS) an den Eingangs-/Ausgangsschaltkreis (EAS1, EAS2, EAS) gibt.

28. Antiblockierregelsystem nach Anspruch 25 oder 26,
dadurch gekennzeichnet, daß
wenigstens einer der Eingangs-/Ausgangsschaltkreise (EAS1, EAS2, EAS) die Spannungsversorgung der Aktuatoren unterbricht (AKT1, AKT2, AKT), wenn diese Eingangs-/Ausgangsschaltkreise (EAS1, EAS2, EAS) ein Resetsignal (RES) erzeugt.

29. Antiblockierregelsystem nach Anspruch 25 oder 26,
dadurch gekennzeichnet, daß
wenigstens einer der Eingangs/Ausgangsschaltkreise (EAS1, EAS) die Spannungsversorgung der Aktuatoren (AKT1, AKT2, AKT) unterbricht, wenn die von den Mikrorechnern (MR1, MR2, MR) ausgetauschten Kontrollsignale (KS) nicht übereinstimmen.

30. Antiblockierregelsystem nach Anspruch 25,
dadurch gekennzeichnet, daß
die Aktuatoren (AKT1, AKT2, AKT) Magnetventile sind.

31. Antiblockierregelsystem nach Anspruch 25,
dadurch gekennzeichnet, daß
eine Meldeeinrichtung vorgesehen ist, die signalisiert, wenn die Verfügbarkeit des Antiblockierregelsystems nicht mehr gegeben ist.

32. Antiblockierregelsystem nach Anspruch 31,
dadurch gekennzeichnet, daß
die Meldeeinrichtung das Abschalten des Fail-Safe-Relais (FSR) anzeigt.

33. Antiblockierregelsystem nach Anspruch 32,
dadurch gekennzeichnet, daß
die Meldeeinrichtung über einen Ruhekontakt des Fail-Safe-Relais (FSR) betätigt wird.

34. Antiblockierregelsystem nach Anspruch 31,
dadurch gekennzeichnet, daß
die Meldeeinrichtung eine Warnlampe (WAL) ist.

35. Antiblockierregelsystem nach Anspruch 26,
dadurch gekennzeichnet, daß
mindestens einer der Eingangs-/Ausgangsschaltkreise (EAS1, EAS) die Höhe des Stroms durch das Fail-Safe-Relais (FSR) überwacht.

36. Antiblockierregelsystem nach Anspruch 35,
dadurch gekennzeichnet, daß
der Eingangs-/Ausgangsschaltkreis (EAS1, EAS) die Fail-Safe-Relaisstromstärke durch Messung des Spannungsabfalls an einem Widerstand ermittelt.

37. Antiblockierregelsystem nach Anspruch 35 oder 36,
dadurch gekennzeichnet, daß
der Eingangs-/Ausgangsschaltkreis (EAS1, EAS) das Fail-Safe-Relais (FSR) abschaltet, wenn der Fail-Safe-Relaisstrom einen vorgegebenen Wert überschreitet.

38. Antiblockierregelsystem nach Anspruch 35,
dadurch gekennzeichnet, daß
der Eingangs-/Ausgangsschaltkreis (EAS1, EAS) die Fail-Safe-Relaisstromstärke auf einen vorgegebenen Wert einregelt.

39. Antiblockierregelsystem nach Anspruch 26,
dadurch gekennzeichnet, daß
mindestens einer der Eingangs-/Ausgangsschaltkreise (EAS1, EAS) die Spannung an einem Kontakt des Fail-Safe-Relais (FSR) überwacht.

40. Antiblockierregelsystem nach Anspruch 39,
dadurch gekennzeichnet, daß
die Spannungsüberwachung über einen Fensterkomparator erfolgt.

41. Antiblockierregelsystem nach Anspruch 31,
dadurch gekennzeichnet, daß
mindestens einer der Eingangs-/Ausgangsschaltkreise (EAS2, EAS) die Funktion der Meldeeinrichtung überwacht.

42. Antiblockierregelsystem nach Anspruch 41,
dadurch gekennzeichnet, daß
der Eingangs-/Ausgangsschaltkreis (EAS2, EAS) den durch die Meldeeinrichtung fließenden Strom überwacht.

43. Antiblockierregelsystem nach Anspruch 42,
dadurch gekennzeichnet, daß
zum Eingangs-/Ausgangsschaltkreis (EAS2, EAS) ein Tiefpaßfilter (WFIL) zur Ausfilterung des Einschaltstromimpulses der Meldeeinrichtung gehört.

## Claims

1. An anti-lock control stystem, comprising
- at least two microcomputers (MR1, MR2, MR)
which are supplied with the same wheel rotation speed signals (DS1, DS2),
which evaluate those signals independently of each other,
which generate check signals (KS) based on those signals,
which compare the check signals (KS), and
which generate an error signal (FS1, FS2, FS) if the check signals (KS) are not conform
- at least one input/output circuit (EAS1, EAS2, EAS)
which controls a fail-safe relay (FSR) and
which interrupts the voltage supply to actuators (AKT1, AKT2, AKT) by switching off the fail-safe relay (FSR) if an error signal (FS1, FS2, FS) is supplied from at least one of the microcomputers (MR1, MR2, MR),
**characterized** in that
- at least two input/output circuits (EAS1, EAS2, EAS) are provided to monitor given signal lines of the microcomputers (MR1, MR2, MR) as well as at least one other electrical entity (USR) of the anti-lock control system, and in that
- each input/output circuit (EAS1, EAS2, EAS) has an inhibit signal output (INH OUT) to emit an inhibit signal (INH) which blocks the function of given parts (ATS1, ATS2, ATS, AKT1, AKT2, AKT, PMR) of the anti-lock control system
if an inhibit signal (INH) is applied from at least one of the microcomputers (MR1, MR2, MR) to one of the input/output circuits (EAS1, EAS2, EAS)
or
if an erroneous value of the monitored electrical entity (USR) is applied.

2. The anti-lock control system as claimed in claim 1, characterized in that a voltage regulator (SR) is provided to feed given components of the anti-lock control system with stabilized voltage (USR).

3. The anti-lock control system as claimed in claim 2, characterized in that the given components of the anti-lock control system include at least one microcomputer (MR1, MR2, MR).

4. The anti-lock control system as claimed in claim 2, characterized in that the given components of the anti-lock control system include at least one actuator drive circuit (ATS1, ATS2, ATS).

5. The anti-lock control system as claimed in claim 2, characterized in that the magnitude of the voltage (USR) supplied by the voltage regulator (SR) is 5 V.

6. The anti-lock control system as claimed in claim 2, characterized in that the voltage regulator (SR) can be influenced by a control signal (ÜS) such as to interrupt the voltage supply of the given components of the anti-lock control system.

7. The anti-lock control system as claimed in claim 1, characterized in that the input/output circuits (EAS1, EAS2, EAS) are of identical structure.

8. The anti-lock control system as claimed in claim 1, characterized in that the input/output circuits (EAS1, EAS2, EAS) operate independently of each other.

9. The anti-lock control system as claimed in claim 1, characterized in that at least one of the input/output circuits (EAS1, EAS2, EAS) can control a fail-safe relay (FSR).

10. The anti-lock control system as claimed in claim 1, characterized in that each one of the input/output circuits (EAS1, EAS2, EAS) comprises at least one window comparator (FK) to monitor at least one voltage.

11. The anti-lock control system as claimed in claim 10, characterized in that the voltage monitored by the input/output circuits (EAS1, EAS2, EAS) is not identical with the operating voltage (UB) of the input/output circuits (EAS1, EAS2, EAS).

12. The anti-lock control system as claimed in claims 2 and 10, characterized in that the voltage monitored by the input/output circuits (EAS1, EAS2, EAS) is the voltage (USR) supplied by the voltage regulator (SR).

13. The anti-lock control system as claimed in claim 10, characterized in that a filter (FIL) is/are connected upstream of the window comparator(s) (FK) to filter out brief voltage irregularities.

14. The anti-lock control system as claimed in claim 10, characterized in that each one of the input/output circuits (EAS1, EAS2, EAS) generates a reset signal (RES) and applies it to at least one of the microcomputers (MR1, MR2, MR) if a voltage (USR) outside of the window range (USR < UFU or USR > UFO) is applied to the window comparator (FK).

15. The anti-lock control system as claimed in claim 10, characterized in that each one of the input/output circuits (EAS1, EAS2, EAS) continues to emit the reset signal (RES) released by a voltage (USR) below the window range (USR < UFU) for a predetermined period of time after the voltage level again has reached a value within the window range (UFU < USR < UFO).

16. The anti-lock control system as claimed in any one of claims 10 to 14, characterized in that each one of the input/output circuits (EAS1, EAS2, EAS) generates an overvoltage signal (ÜS) if a voltage (USR) above the window range (USR > UFO) of the window comparator (FK) is applied.

17. The anti-lock control system as claimed in claims 6 and 16, characterized in that the overvoltage signal (ÜS) is fed to the voltage regulator (SR) if a voltage (USR) above the window range (USR > UFO) of the window comparator (FK) is applied, and thereupon the voltage regulator interrupts the supply of voltage to given components of the anti-lock control system.

18. The anti-lock control system as claimed in claim 16, characterized in that each one of the input/output circuits (EAS1, EAS2, EAS) generates an overvoltage signal (ÜS) if too high a voltage (USR > UFO) is applied to the window comparator (FK) for longer than the filtering period set by the filter (FIL).

19. The anti-lock control system as claimed in claims 14 and 16, characterized in that each one of the input/output circuits (EAS1, EAS2, EAS) comprises memory means (SPR, SPÜ) which store both the reset signal (RES) and the overvoltage signal (ÜS) until the supply voltage on board (UB) is switched off.

20. The anti-lock control system as claimed in any one of the preceding claims, characterized in that the given parts of the anti-lock control system comprise the actuator drive circuits (ATS1, ATS2, ATS).

21. The anti-lock control system as claimed in any one of the preceding claims, characterized in that the given parts of the anti-lock control system comprise a pump motor relay (PMR).

22. The anti-lock control system as claimed in any one of the preceding claims, characterized in that each one of the input/output circuits (EAS1, EAS2, EAS) generates the inhibit signal (INH) when a reset signal (RES) appears.

23. The anti-lock control system as claimed in any one of the preceding claims, characterized in that each one of the input/output circuits (EAS1, EAS2, EAS) has an inhibit signal input (IHN IN), and the input/output circuit (EAS1, EAS2, EAS) generates the inhibit signal (IHN) when a certain logic level is applied to the inhibit signal input.

24. The anti-lock control system as claimed in claim 23, characterized in that each one of the inhibit signal inputs (INH IN) is connected to one of the microcomputer outputs.

25. The anti-lock control system as claimed in claim 1, characterized in that at least one of the input/output circuits (EAS1, EAS) interrupts the voltage supply to the actuators (AKT1, AKT2, AKT) when given conditions occur within the anti-lock control system.

26. The anti-lock control system as claimed in claim 25, characterized in that the switch-off of the actuators (AKT1, AKT2, AKT) is caused by switch-off of at least one fail-safe relay (FSR).

27. The anti-lock control system as claimed in claim 25 or 26, characterized in that at least one of the input/output circuits (EAS1, EAS2, EAS) interrupts the voltage supply to the actuators (AKT1, AKT2, AKT) if at least one of the microcomputers (MR1, MR2, MR) feeds an error signal (FS1, FS2, FS) to the input/output circuit (EAS1, EAS2, EAS).

28. The anti-lock control system as claimed in claim 25 or 26, characterized in that at least one of the input/output circuits (EAS1, EAS2, EAS) interrupts the voltage supply to the actuators (AKT1, AKT2, AKT) if these input/output circuits (EAS1, EAS2, EAS) generates a reset signal (RES).

29. The anti-lock control system as claimed in claim 25 or 26, characterized in that at least one of the input/output circuits (EAS1, EAS2, EAS) interrupts the voltage supply to the actuators (AKT1, AKT2, AKT) if the check signals (KS) exchanged by the microcomputers (MR1, MR2, MR) are not conform.

30. The anti-lock control system as claimed in claim 25, characterized in that the actuators (AKT1, AKT2, AKT) are magnetic valves.

31. The anti-lock control system as claimed in claim 25, characterized in that a signaling means is provided to signal when the availability of the anti-lock control system is given no longer.

32. The anti-lock control system as claimed in claim 31, characterized in that the signaling means indicates the switching-off of the fail-safe relay (FSR).

33. The anti-lock control system as claimed in claim 32, characterized in that the signaling means is actuated through a normally closed contact of the fail-safe relay (FSR).

34. The anti-lock control system as claimed in claim 32, characterized in that the signaling means is a warning lamp (WAL).

35. The anti-lock control system as claimed in claim 26, characterized in that at least one of the input/output circuits (EAS1, EAS) monitors the level of current through the fail-safe relay (FSR).

36. The anti-lock control system as claimed in claim 35, characterized in that the input/output circuit (EAS1, EAS) determines the fail-safe relay current intensity by measuring the voltage drop at a resistor.

37. The anti-lock control system as claimed in claim 35 or 36, characterized in that the input/output circuit (EAS1, EAS) turns off the fail-safe relay (FSR) if the fail-safe relay current exceeds a predetermined value.

38. The anti-lock control system as claimed in claim 35, characterized in that the input/output circuit (EAS1, EAS) regulates the fail-safe relay current intensity to a predetermined value.

39. The anti-lock control system as claimed in claim 26, characterized in that at least one of the input/output circuits (EAS1, EAS) monitors the voltage at a contact of the fail-safe relay (FSR).

40. The anti-lock control system as claimed in claim 39, characterized in that the monitoring of the voltage is effected via a window comparator.

41. The anti-lock control system as claimed in claim 31, characterized in that at least one of the input/output circuits (EAS2, EAS) monitors the function of the signaling means.

42. The anti-lock control system as claimed in claim 41, characterized in that the input/output circuit (EAS2, EAS) monitors the current flowing through the signaling means.

43. The anti-lock control system as claimed in claim 42, characterized in that the input/output circuit (EAS2, EAS) comprises a lowpass filter (WFIL) to filter out the switch-on current pulse of the signaling means.

## Revendications

1. Système antiblocage, comprenant au moins deux microcalculateurs (MR1, MR2, MR), auxquels sont appliqués des signaux identiques de vitesse de roue (DS1, DS2), qui analysent ces signaux indépendamment les uns des autres, qui produisent des signaux de contrôle (KS) à partir de ces signaux, qui comparent ces signaux de contrôle (KS), et qui produisent un signal d'erreur (FS1, FS2, FS) en cas de non concordance des signaux de contrôle (KS), et comprenant au moins un circuit entrée/sortie (EAS1, EAS2, EAS), qui pilote un relais à sécurité intrinsèque (FSR), et qui, en cas de présence d'un signal d'erreur (FS1, FS2, FS) engendré par au moins l'un des microcalculateurs (MR1, MR2, MR) interrompt l'alimentation en tension d'actionneurs (AKT1, AKT2, AKT) au moyen de la coupure du relais à sécurité intrinsèque (FSR), caractérisé en ce que au moins deux circuits entrée/sortie (EAS1, EAS2, EAS) sont prévus, qui surveillent les lignes de signaux prédéfinies des microcalculateurs (MR1, MR2, MR) ainsi qu'au moins une autre grandeur électrique (USR) du système antiblocage, et en ce que chaque circuit entrée/sortie (EAS1, EAS2, EAS) comporte une sortie de signaux inhibiteurs (INH OUT) pour fournir un signal inhibiteur (INH) qui, en présence d'un signal inhibiteur (INH) provenant d'au moins l'un des microcalculateurs (MR1, MR2, MR) au niveau d'un des circuits entrée/sortie (EAS1, EAS2, EAS) ou en présence d'une valeur erronée de la grandeur électrique surveillée (USR) bloque la fonction de parties prédéfinies (ATS1, ATS2, ATS, AKT1, AKT2, AKT, PMR) du système antiblocage.

2. Système antiblocage selon la revendication 1, caractérisé en ce qu'il est prévu un régulateur de tension (SR) qui fournit une tension stabilisée (USR) à des composants prédéfinis du système antiblocage.

3. Système antiblocage selon la revendication 2, caractérisé en ce que au moins un microcalculateur (MR1, MR2, MR) fait partie des composants prédéfinis du système antiblocage.

4. Système antiblocage selon la revendication 2, caractérisé en ce que au moins un circuit d'attaque d'actionneur (ATS1, ATS2, ATS) fait partie des composants prédéfinis du système antiblocage.

5. Système antiblocage selon la revendication 2, caractérisé en ce que la valeur de la tension (USR) fournie par le régulateur de tension (SR) est égale à 5 volts.

6. Système antiblocage selon la revendication 2, caractérisé en ce que le régulateur de tension (SR) peut être influencé par un signal de commande (ÜS), de telle façon qu'il interrompe l'alimentation en tension des composants prédéfinis du système antiblocage.

7. Système antiblocage selon la revendication 1, caractérisé en ce que les circuits entrée/sortie (EAS1, EAS2, EAS) présentent une structure identique.

8. Système antiblocage selon la revendication 1, caractérisé en ce que les circuits entrée/sortie (EAS1, EAS2, EAS) fonctionnent indépendamment les uns des autres.

9. Système antiblocage selon la revendication 1, caractérisé en ce que au moins un des circuits entrée/sortie (EAS1, EAS2, EAS) peut piloter un relais à sécurité intrinsèque (FSR).

10. Système antiblocage selon la revendication 1, caractérisé en ce que chacun des circuits entrée/sortie (EAS1, EAS2, EAS) comporte au moins un comparateur à fenêtre (FK) pour la surveillance d'au moins une tension.

11. Système antiblocage selon la revendication 10, caractérisé en ce que la tension surveillée par les circuits entrée/sortie (EAS1, EAS2, EAS) n'est pas identique à la tension d'alimentation (UB) des circuits entrée/sortie (EAS1, EAS2, EAS).

12. Système antiblocage selon les revendications 2 et 10, caractérisé en ce que la tension surveillée par les circuits entrée/sortie (EAS1, EAS2, EAS) est la tension (USR) délivrée par le régulateur de tension (SR).

13. Système antiblocage selon la revendication 10, caractérisé en ce que un/des filtre(s) (FIL) est/sont monté(s) en amont du/des comparateur(s) à fenêtre (FK) pour éliminer par filtrage de brèves irrégularités de tension.

14. Système antiblocage selon la revendication 10, caractérisé en ce que chacun des circuits entrée/sortie (EAS1, EAS2, EAS), en présence d'une tension (USR), sur le comparateur à fenêtre (FK), qui est située en dehors de la plage de fenêtre (USR < UFU ou USR > UFO), produit un signal de remise à zéro (RES) et le fournit à au moins l'un des microcalculateurs (MR1, MR2, MR).

15. Système antiblocage selon la revendication 14, caractérisé en ce que chacun des circuits entrée/sortie (EAS1, EAS2, EAS), lors du déclenchement du signal de remise à zéro (RES) par une tension (USR) inférieure à la plage de fenêtre (USR < UFU), continue à délivrer le signal de remise à zéro (RES) pendant une autre période de temps prédéfinie après que la valeur de la tension se soit de nouveau calée à l'intérieur de la plage de fenêtre (UFU < USR < UFO).

16. Système antiblocage selon les revendications 10 à 14, caractérisé en ce que chacun des circuits entrée/sortie (EAS1, EAS2, EAS), en présence d'une tension (USR) supérieure à la plage de fenêtre (USR > UFO) du comparateur à fenêtre (FK), produit un signal de surtension (ÜS).

17. Système antiblocage selon les revendications 6 et 16, caractérisé en ce que, en présence d'une tension (USR) supérieure à la plage de fenêtre (USR > UFO) du comparateur à fenêtre (FK), le régulateur de tension (SR) reçoit le signal de surtension (ÜS) et que ce signal interrompt alors l'alimentation en tension des composants prédéfinis du système antiblocage.

18. Système antiblocage selon la revendication 16, caractérisé en ce que chacun des circuits entrée/sortie (EAS1, EAS2, EAS) produit un signal de surtension (ÜS) si une tension trop élevée (USR > UFO) est présente au niveau du comparateur à fenêtre (FK) pendant une durée supérieure à une durée de filtrage prédéfinie par le filtre (FIL).

19. Système antiblocage selon les revendications 14 et 16, caractérisé en ce que, à chacun des circuits entrée/sortie (EAS1, EAS2, EAS), appartiennent des équipements de mémoire (SPR, SPÜ) qui gardent en mémoire aussi bien le signal de remise à zéro (RES) que le signal de surtension (ÜS) jusqu'à la coupure de la tension du réseau de bord (UB).

20. Système antiblocage selon l'une des revendications précédentes, caractérisé en ce que les circuits d'attaque d'actionneur (ATS1, ATS2, ATS) font partie des parties prédéfinies du système antiblocage.

21. Système antiblocage selon l'une des revendications précédentes, caractérisé en ce que un relais de moteur de pompe (PMR) fait partie des parties prédéfinies.

22. Système antiblocage selon l'une des revendications précédentes, caractérisé en ce que chacun des circuits entrée/sortie (EAS1, EAS2, EAS) produit le signal inhibiteur (INH) lors de l'apparition d'un signal de remise à zéro (RES).

23. Système antiblocage selon une des revendication précédentes, caractérisé en ce que, au niveau de chacun des circuits entrée/sortie (EAS1, EAS2, EAS), il est prévu une entrée de signal inhibiteur (INHIN) qui, lorsqu'elle reçoit un niveau logique défini, amène le circuit entrée/sortie (EAS1, EAS2, EAS) à produire le signal inhibiteur (INH).

24. Système antiblocage selon la revendication 23, caractérisé en ce que chacune des entrées de signaux inhibiteurs mentionnées (INH IN) est reliée à l'une des sorties de microcalculateur.

25. Système antiblocage selon la revendication 1, caractérisé en ce que au moins l'un des circuits entrée/sortie (EAS1, EAS), lors de l'apparition d'états prédéfinis à l'intérieur du système antiblocage, interrompt l'alimentation en tension des actionneurs (AKT1, AKT2, AKT).

26. Système antiblocage selon la revendication 25, caractérisé en ce que la coupure des actionneurs (AKT1, AKT2, AKT) est provoquée par la coupure d'au moins un relais à sécurité intrinsèque (FSR).

27. Système antiblocage selon la revendication 25 ou 26, caractérisé en ce que au moins l'un des circuits entrée/sortie (EAS1,EAS2, EAS) interrompt l'alimentation en tension des actionneurs (AKT1, AKT2, AKT) si au moins l'un des microcalculateurs (MR1, MR2, MR) fournit un signal d'erreur (FS1, FS2, FS) au circuit entrée/sortie (EAS1,EAS2, EAS).

28. Système antiblocage selon la revendication 25 ou 26, caractérisé en ce que au moins l'un des circuits entrée/sortie (EAS1,EAS2, EAS) interrompt l'alimentation en tension des actionneurs (AKT1, AKT2, AKT) si ces circuits entrée/sortie (EAS1,EAS2, EAS) produisent un signal de remise à zéro (RES).

29. Système antiblocage selon la revendication 25 ou 26, caractérisé en ce que au moins l'un des circuits entrée/sortie (EAS1, EAS) interrompt l'alimentation en tension des actionneurs (AKT1, AKT2, AKT) si les signaux de contrôle (KS) échangés par les microcalculateurs (MR1, MR2, MR) ne concordent pas.

30. Système antiblocage selon la revendication 25, caractérisé en ce que les actionneurs (AKT1, AKT2, AKT) sont des électrovannes.

31. Système antiblocage selon la revendication 25, caractérisé en ce qu'il est prévu un équipement de signalisation qui signale l'indisponibilité du système antiblocage.

32. Système antiblocage selon la revendication 31, caractérisé en ce que l'équipement de signalisation indique la coupure du relais à sécurité intrinsèque (FSR).

33. Système antiblocage selon la revendication 32, caractérisé en ce que l'équipement de signalisation est actionné par le biais d'un contact de repos du relais à sécurité intrinsèque (FSR).

34. Système antiblocage selon la revendication 31, caractérisé en ce que l'équipement de signalisation est un voyant lumineux (WAL).

35. Système antiblocage selon la revendication 26, caractérisé en ce que au moins l'un des circuits entrée/sortie (EAS1, EAS) surveille l'intensité du courant traversant le relais à sécurité intrinsèque (FSR).

36. Système antiblocage selon la revendication 35, caractérisé en ce que le circuit entrée/sortie (EAS1, EAS) détermine l'intensité du courant du relais à sécurité intrinsèque par la mesure de la chute de tension aux bornes d'une résistance.

37. Système antiblocage selon la revendication 35 ou 36, caractérisé en ce que le circuit entrée/sortie (EAS1, EAS) coupe le relais à sécurité intrinsèque (FSR) quand le courant de relais à sécurité intrinsèque dépasse une valeur prédéfinie.

38. Système antiblocage selon la revendication 35, caractérisé en ce que le circuit entrée/sortie (EAS1, EAS) règle l'intensité du relais à sécurité intrinsèque (FSR) sur une valeur prédéfinie.

39. Système antiblocage selon la revendication 26, caractérisé en ce que au moins l'un des circuits entrée/sortie (EAS1, EAS) surveille la tension au niveau d'un contact du relais à sécurité intrinsèque (FSR).

40. Système antiblocage selon la revendication 39, caractérisé en ce que la surveillance de tension s'effectue par le biais d'un comparateur à fenêtre.

41. Système antiblocage selon la revendication 31, caractérisé en ce que au moins l'un des circuits entrée/sortie (EAS2, EAS) surveille le fonctionnement de l'équipement de signalisation.

42. Système antiblocage selon la revendication 41, caractérisé en ce que le circuit entrée/sortie (EAS2, EAS) surveille le courant qui traverse l'équipement de signalisation.

43. Système antiblocage selon la revendication 42, caractérisé en ce que un filre passe-bas (WFIL) appartient au circuit entrée/sortie (EAS2, EAS) pour éliminer par filtrage l'impulsion de courant de démarrage de l'équipement de signalisation.
